# EUROPEAN PATENT SPECIFICATION

(11) **EP 1 397 301 B1**
(45) Date of publication and mention of the grant of the patent: **24.05.2006**
(21) Application number: 02736440.5
(22) Date of filing: 14.06.2002
(51) Int. Cl.: B65H 3/08, B65H 5/10, B25J 18/00

(54) **FEEDER DEVICE AND METHOD OF FEEDING**
ZUFUHRVORRICHTUNG UND ZUFUHRVERFAHREN
DISPOSITIF ET PROCEDE D'ALIMENTATION

(30) Priority: 20.06.2001 SE 0102212
(43) Date of publication of application: 17.03.2004
(73) Proprietor: ABB AB, 721 78 Västeras (SE)
(72) Inventor: ERIKSSON, Bengt, S-375 91 Mörrum (SE); BENGISSON, Brodde, S-293 72 Jämshög (SE)
(74) Representative: Dahlstrand, Björn
(86) International application number: PCT/SE2002/001148
(87) International publication number: WO 2002/102691

(56) References cited:
- DE-A1- 3 420 839
- GB-A- 2 092 997
- US-A- 4 081 085
- US-A- 4 618 309
- US-A- 4 655 675
- US-A- 5 395 103

## Description

### TECHNICAL FIELD

The present invention relates to a device for the continuous and individual feeding of sheet metal plates from a stack of sheets to a deposition site, and comprising a movement device for displacement of gripping members which are designed to individually grasp and hold the sheets, between the sheet stack and the deposition site, and back.

The present invention further relates to a feeder station for the continuous and individual discharge of sheets and comprising at least one, but preferably two stacks of sheets which are to be fed, a deposition site for sheets and a feeder device for the individual picking of sheets and deposition thereof at the deposition site.

Finally, the present invention relates to a method of continuous and individual feeding of sheets from a stack of sheets to a deposition site, use being made of a movement device by means of which gripping members designed to individually grasp and hold the sheets move them from the stack to the deposition site.

### BACKGROUND ART

In the mechanisation of presses or press lines, the individual sheets are collected from a stack of sheets by means of some type of feeder device which individually feeds the sheets to a centring device where the sheets are accurately positionally fixed and from whence they are subsequently fed into the press. On condition that the position of the sheet stack is accurately known, the sheets can possibly be fed straight into the press. Given that increasing mechanisation is taking place, it has been possible to increase the capacity of the press or the press line considerably in recent years. This implies that a feeding rate of 30 workpieces/min is desirable, a level which today's technology cannot meet using two picking stations.

Many press lines are obsolescent but have been gradually modernised. This often entails that the space ahead of the first press or between adjacent presses is extremely small, since presses were previously fed manually.

A type of feeder device, the so-called dip feeder, displays a pattern of movement which implies that each end of a rectilinear movement is downwardly directed.

In order to realise such a pattern of movement, complex mechanics are required with large, moving masses, from which it follows that the maximum workrate will be limited in the extreme. Consequently, a dip feeder cannot be used when the requirement on capacity exceeds 15/20 workpieces/min. If instead two dip feeders are employed which alternatingly take sheets from a stack, there will be a break in the feeding operation when the stack is consumed and must thus be replaced by a new stack. Such a production stoppage in a long, mechanised production line cannot be accepted.

It has also been proposed that an industrial robot be employed for the feeding of metal sheets. In order to meet the above-mentioned workrate without stoppage on the replenishment of the sheet stack, four robots would be required, which in turn requires a large space, entailing that the robots, for this reason alone, are unusable in most cases. In addition, the costs involved will be prohibitively high.

GB 2 092 997 teaches a sheet feeding apparatus, for applying sheets of paper or the like to a cutting machine, comprising arms which are rotated about a common axis between work stations. The feeding apparatus is applicable to existing cutting machines to convert them from manual to automatic feed of sheet material.

### OUTLINE OF THE INVENTION

The present invention has for its object to design the feeder device intimated by way of introduction, the feeder station intimated by way of introduction, and also the method intimated by way of introduction such that sufficient capacity is attained, that the requirement on small space needs can be met and that continuous operation can be carried out for lengthy periods of time, as well as that equipment employed can stand on the floor and costs can be kept within an acceptable ceiling.

The objects forming the basis of the present invention with respect to the feeder device will be attained if this is given the characterising features as set forth in appended Claim 1.

These characterising features afford the advantage that a high capacity is achieved in that both of the arms can operate alternatingly, small spaces needs in that both of the arms pivot about a common axis, continuous operation in that the arms may be employed for the alternating picking of sheets from two different stacks, and finally that the device may readily be placed on the workshop floor.

As a result, the major advantage will be afforded that a feeder station is realised with high capacity since it operates alternatingly to one and the same sheet stack, space needs will be small since both gripping member pivot about a common axis, and continuous operation can be attained in that two stacks can be processed alternatingly.

The objects forming the basis of the present invention with respect to the method will be attained if this is given the characterising features as set forth in appended Claim 11.

These characterising features afford the advantage of great rapidity by the alternating employment of the two gripping members, the requirement on small space needs will be met by the concentric pivoting of the gripping members and continuous operation will be attained by the alternating processing of two different stacks.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a vertical side elevation of a feeder device according to the present invention;
- Fig. 2: is a vertical front elevation of a feeder station according to the present invention, the greater part of the frame and similar components having been omitted for purposes of clarity; and
- Fig. 3: shows from above and highly schematically a part of the feeder station according to Fig. 2.

### DESCRIPTION OF PREFERRED EMBODIMENT

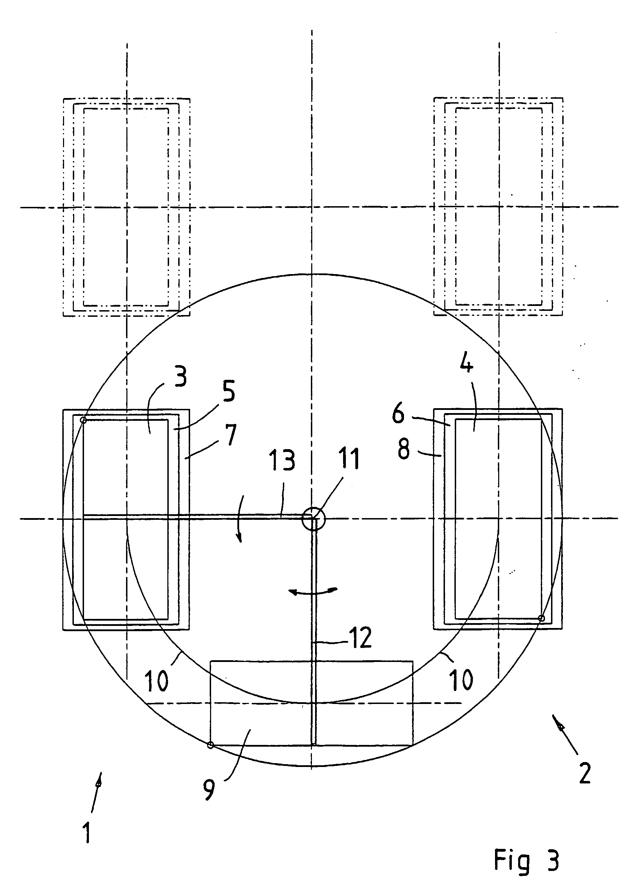

Fig. 3 shows a feeder station schematically from above. The station includes a first 1 and a second 2 stack of metal sheets 3 and 4, respectively. The sheet stacks 1 and 2 rest on pallets 5 and 6, respectively, which in turn rest on lifting tables 7 and 8, respectively. The lifting tables are arranged in such a manner that they gradually lift the sheet stacks 1 and 2 as these are consumed so that the height level of the uppermost sheet in each stack is always substantially constant.

The sheets 3 and 4 on the sheet stacks 1 and 2, respectively, are to be fed individually to a deposition site 9 which is at the same height level at the level of the uppermost sheets 3 and 4, respectively. The sheet stacks 1 and 2, as well as the deposition site 9, are arranged along a common arc of a circle 10 where, in the illustrated embodiment, they have a 90° distribution. The centre of this arc of a circle carries reference numeral 11.

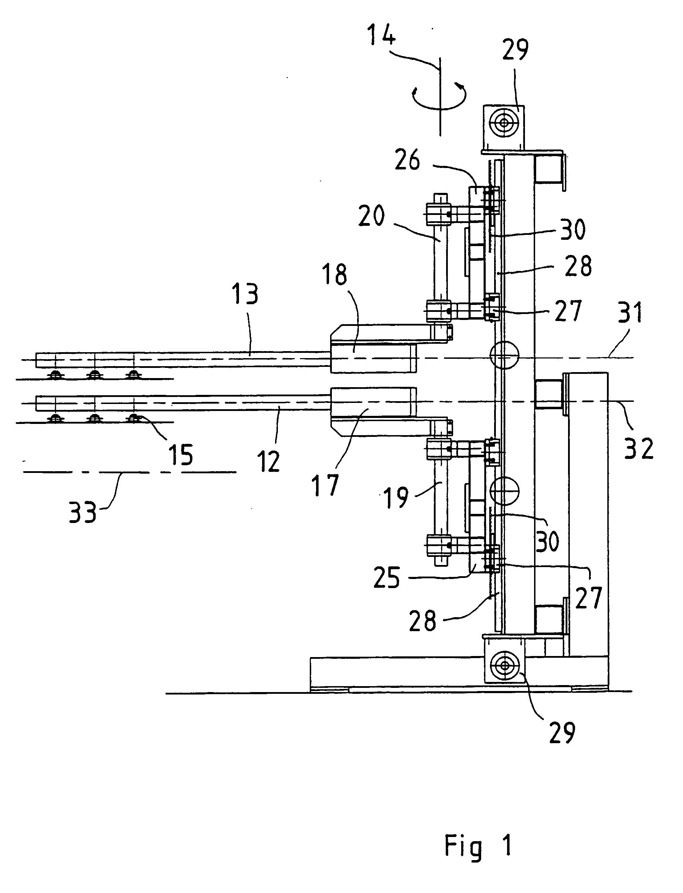

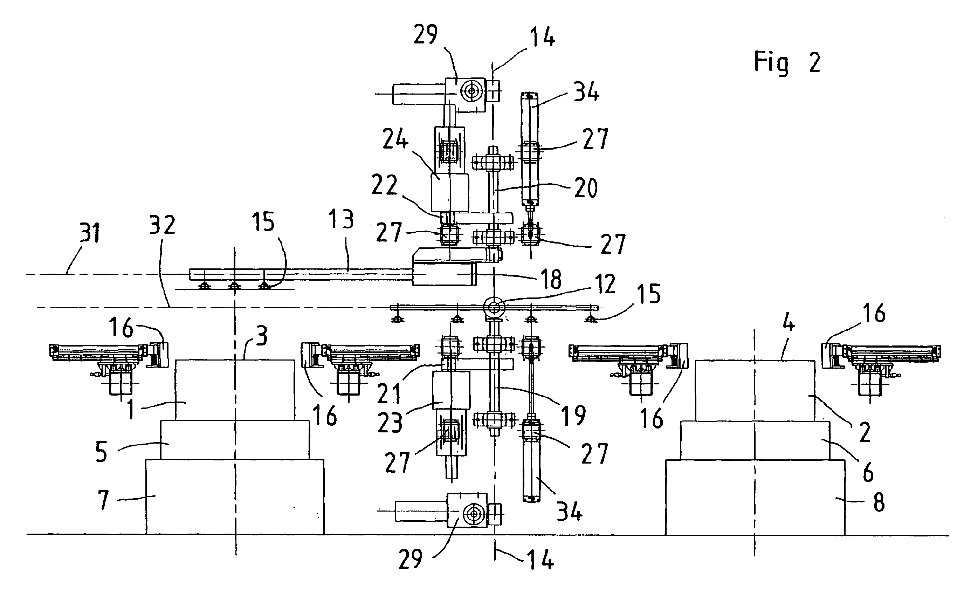

In the region of the centre 11 of the arc of a circle 10, there is disposed a movement device which will be described in greater detail below with reference to Figs. 1 and 2, and which has a first or lower pivotal arm 12 and a second or upper pivotal arm 13 which are provided with gripping members (not shown in Fig. 3) for gripping and fixedly retaining the sheets. Both of the pivotal arms 12 and 13 have a common pivot axis 14 (Figs. 1 and 2) which also coincides with a substantially vertical line through the centre I 1 of the arc of a circle 10.

Both of the pivotal arms 12 and 13 are movable in the vertical direction along a vertical line which coincides with the pivot axis 14 through the centre point 11. In such instance, the first arm 12 is movable in the vertical direction from a deposition level for depositing a sheet on the deposition site 9, the level 33 also coinciding with a level 33 for picking a sheet at either of the two stacks 1 and 2. From this lower level, the first arm 12 is movable in an upward direction to a highest level 32. Correspondingly, the second arm 13 is movable from a pick-up or deposition level 33 for picking a sheet and for depositing it at the deposition site 9. This picking or deposition level coincides with a corresponding level for the first pivotal arm. In the vertical direction, the second arm is movable to a highest level 31 which is located above the highest level of the first arm 12. By raising the second arm 13 to its highest level, the arms can be pivoting past one another also when a sheet is secured in the gripping members 15 disposed on the arms.

On operation of the feeder station, it may be assumed that the first arm 12 is located in its deposition level at the deposition site 9 and that the second arm 13 is located in the picking position at the stack 1. When the first arm has deposited its sheet and the second arm has grasped a new sheet, both of the arms are raised to their respective highest levels 32 and 31. When the lifting operation is completed so far that the sheets are free of the stacks 1 and 2 and peripheral equipment such as separators 16, a pivotal movement may be commenced for both arms in opposite directions. Alternatively, the pivotal movement may be initiated only when both arms 12 and 13 have reached their respective highest levels. After completed pivoting through 90° in opposite directions, the arms have changed place so that the second arm is located above the deposition site 9 while the first arm is located over the stack 1. Thereafter, the arms are lowered to their lower deposition or picking levels and the cycle is repeated.

When, for example, the first stack 1 is consumed, the arms 12 and 13 are pivoted to the second stack 2 for feeding sheets from this stack to the deposition site. During the time this feeding takes place from the second stack, the first stack is replenished, for which reason no operational stoppage need be feared when the stack is replenished. Once the second stack 2 has also been consumed, the arms 12 and 13 are pivoted back in order to feed sheets from the stack 1 to the deposition site 9, during which time the second stack 2 is replenished. As a result of the alternating cooperation of the arms 12 and 13 with the stack 1 and the stack 2, respectively, the possibility for continuous operation is thus offered.

In one practical version, the deposition site 9 may consist of a centring device where the individual sheets are accurately positioned at known positions in order thereafter to be transported to a press tool in a press line.

If the position of the two stacks 1 and 2 is accurately defined, the sheets deposited at the deposition site 9 can, in an alternative version, be transported directly further to a press.

Fig. 2 shows the feeder station according to Fig. 3 in slightly greater detail. In this Figure, the vertical line which passes through the centre 11 of the arc of a circle 10 has been given reference numeral 14. Both arms 11 and 12 are shown in the same positions as in Fig. 3. It will further be apparent that, at the free ends of the arms 12 and 13, there is disposed a frame or so-called headpiece which is provided with a number of gripping members 15 which, in the illustrated embodiment, consist of suction cups of rubber. In the Figure, both of the arms 12 and 13 are also shown in their respective highest positions 32 and 31, respectively.

It will be apparent from the Figure that sheet separators 16 are disposed adjacent the two stacks 1 and 2 and serve the purpose of preventing more than one sheet at a time from being grasped by the gripping members 15. It will further be apparent that the sheet separators prevent an unduly early commencement of the pivotal movements of the two arms, since, in such a case, the grasped sheet would otherwise come into contact with the separators and either wholly let go from the gripping members or at least be positionally offset in an unacceptable manner.

It will be apparent from Figs. 1 and 2 taken together that the arms 12 and 13 are, via quick couplings 17 and 18, respectively, each connected to their pivotal shaft or rod 19, 20, respectively. The shafts 19 are 20 are connected, by the intermediary of belt transmissions 21 and 22, respectively, each to their drive motor 23 and 24, respectively, for the pivotal movements of the arms 12 and 13. The shafts 19 and 20 have the vertical pivot axis 14 through the centre 11 of the arc of the circle 10 as their centre line.

The drive motors 23 and 24, the belt transmissions 21 and 22, as well as the shafts 19 and 20 are each disposed on their carrier device 25 and 26, respectively (Fig. 1). The carrier devices display four roller units 27 each, which are movable in a vertical direction along mutually parallel guide rails 28. The carrier devices 25 and 26 are movable in the vertical direction along the guide rails 28 by means of drive motors 29 and belt transmissions 30. In Fig. 1, reference numeral 31 relates to the highest level that the second arm 13 can assume, while reference numeral 32 relates to the highest level that the first arm 12 can assume. Reference numeral 33 relates to the common, lower level for both arms 12 and 13 and coincides with the level for picking a sheet from the stacks 1 or 2 and for depositing a sheet at the deposition site 9.

It will be apparent from Fig. 1 that the movement area of the second arm 13 is approximately twice as large as the movement area of the lower arm 12. As a result, if synchronous operation is to be possible, the second arm 13 must move in the vertical direction approximately twice as quickly as the lower arm and consequently also undergo approximately twice as great acceleration. In one practical embodiment, the distance between the uppermost level 31 and the lowermost level 33 is of the order of magnitude of half a metre. If the device according to the present invention, when the distance is, for example, 475 mm, is to be able to maintain a feeding rate of 30 sheets/min, a complete vertical movement travel for the upper arm 13 must not take more time than 0.5 sec. with 0.25 sec. acceleration and 0.25 sec. retardation. The maximum vertical speed will be 1.9 m/s, while the acceleration is 7.6 m/s². Since the moving masses are considerable (approx. 275 kg including carried sheet), it is possible - in order to reduce the power requirements in the two motors 29 - to employ balancing cylinders 34 for balancing the effects of gravity on these masses so that the drive motors only need cater for the inertia forces.

According to the present invention, it is not necessary that the distribution angles between the stacks 1 and 2 and the deposition site 9 be exactly 90°. Thus, it is, for example in particularly cramped spaces, possible to reduce these angles, perhaps as far as 75°, depending on the dimensions of the sheets in relation to the arm length.

Nor is it necessary that the angles be equal if other circumstances concerning lay-out were to so require.

In a further alternative, the angles may be greater than 90°, even as much as 110°.

The only requirement on the position of the stacks and the deposition site 9 is that they must lie on a common arc of a circle.

In yet a further modified embodiment, the pivot axis 20 for the upper arm 13 may be turned to face downwards and thus be arranged in the same manner as the lower 19. In a further alternative, the lower pivot axis 19 may be cylindrical and at least partly surround the upper axis 20.

Regarding the stacks 1 and 2 and the deposition site 9, it was disclosed earlier that, in the vertical direction, they are disposed on the same level 33. This is a practical measure and facilitates programming of the control unit of the subject matter of the present invention. However, it is not necessary, but the stacks 1 and 2 and the deposition site 9 may instead be disposed at different levels, two on the same level, or all on three different levels.

## Claims

1. A sheet feeding device, for individual displacement of metal sheets (3, 4) from a sheet stack (1, 2) to a deposition site (9), comprising a first (12) and a second arm (13) each provided with gripping member (15) which is designed to individually grasp and hold the sheet (3, 4), **characterised in that** the arms (12, 13) are arranged extending out from and being arranged for pivotal movement to the deposition site, and back, about a common, substantially vertical pivot axis (14); that the arms (12, 13) are movable therealong in the vertical direction to positions (33) for depositing a sheet, to positions (33) for picking a sheet, and to positions (31, 32) where the one arm may be pivoted past over the other for the alternating picking of sheets from two different stacks (1,2) of sheets (3, 4) to be fed.

2. The device as claimed in Claim 1, wherein the first arm (12) is a lower arm, while the second arm (13) is an upper arm; that the upper arm has a larger vertical area of movement than the lower; and that the upper arm has a highest position (31) which is located higher than the highest position (32) of the lower arm.

3. The device as claimed in Claim 1 or 2, wherein the arms (12, 13) are of equal length and have their gripping members (15) placed in the same manner.

4. The device as claimed in any of Claims 1 to 3, wherein the arms (12, 13) are secured each in their rotary rod or shaft (19, 20) which are coaxial with one another and with the pivot axis (14), and also disposed the one over the other, the shafts each being journalled in a carrier device (25, 26) movable in the vertical direction along a guide (28).

5. The device as claimed in Claim 4, wherein a drive motor (23, 24) for pivoting the shafts (19, 20) is disposed on each carrier device (25, 26).

6. The device as claimed in any of Claims 4 or 5, wherein the guide includes mutually parallel guide rails (28), along which roller units (27) may be run on the carrier devices (25, 26).

7. The device as claimed in any of Claims 4 to 6, wherein the carrier devices (25, 26) are carried by and drivable under the action of a motorised (29) toothed belt arrangement (30).

8. The device as claimed in any of Claims 4 to 7, wherein the carrier devices (25, 26) are connected to balancing means (34) for balancing at least a part of their weight.

9. The device as claimed in any of Claims 1 to 8, wherein the arms (12, 13) are reciprocally pivotal within a sector of at least 90°, but preferably 180°.

10. The device as claimed in any of Claims 1 to 9, wherein the sheet stacks (1, 2) and the deposition site (9) are disposed on a common arc of a circle (10) and that the arm (12, 13) being pivotal about a substantially vertical line (14) through the centre point (11) of the arc of the circle (10).

11. A method of individual feeding of sheets (3, 4) from a stack (1, 2) of sheets to a deposition site (9), use being made of a feeding device comprising a first (12) and a second arm (13) provided with gripping members (15) designed for the individual grasping and holding of the sheets and displacing them from the stack to the deposition site, **characterised in that** the first (12) and the second arm (13) are pivoted about a common pivot axis (14) and are vertically displaced therealong and employed for the alternating picking of sheets from two different stacks so that:
a first gripping member (15) discharges a first sheet (3, 4) on the deposition site (9) and a second gripping member (15) grasps a second sheet (3, 4) on the stack (1, 2);
the first gripping member is lifted to a first level (32) and the second gripping member is lifted to a second level (31) higher than the first;
the first and the second gripping members are pivoted in opposite directions so the second passes over the first;
the first and the second gripping members are lowered for picking a third sheet from the stack and depositing the second sheet on the deposition site, respectively;
the first and second gripping members are lifted to the first (32) and second (31) levels, respectively;
the first and the second gripping members are pivoted in opposite directions so that the second passes over the first; and
the first and the second gripping members are lowered for depositing the third sheet on the deposition site and for picking a fourth sheet from the stack, respectively, and so on.

12. The method as claimed in Claim 11, wherein the gripping members (15) are reciprocally pivoted between the first stack (1) and the deposition site (9) until the first stack is consumed and then reciprocally between the second stack (2) and the deposition site (9), while the first stack is replenished.

## Patentansprüche

1. Blechzufuhrvorrichtung zum individuellen Verschieben von Metallblechen (3, 4) von einem Blechstapel (1, 2) zu einer Ablagestelle (9), umfassend einen ersten (12) und einen zweiten Arm (13), wobei jeder mit einem Greifelement (15) versehen ist, welches ausgelegt ist, um das Blech (3, 4) individuell zu greifen und zu halten, **dadurch gekennzeichnet, dass** die Arme (12, 13) angeordnet sind, um sich davon nach außen zu erstrecken, und für eine Schwenkbewegung zu der Ablagestelle und zurück, über eine gemeinsame, im Wesentlichen vertikale Schwenkachse (14) angeordnet sind; dass die Arme (12, 13) entlang dieser in der vertikalen Richtung zu Positionen (33) zum Ablegen eines Bleches beweglich sind, zu Positionen (33), um ein Blech aufzulesen und zu Positionen (31, 32), wo der eine Arm für das abwechselnde Auflesen von Blechern von zwei unterschiedlichen Stapeln (1, 2) von Blechern (3, 4), die zugeführt werden sollen, vorüber über den anderen geschwenkt werden kann.

2. Vorrichtung nach Anspruch 1, wobei der erste Arm (12) ein unterer Arm ist, während der zweite Arm (13) ein oberer Arm ist; dass der obere Arm einen größeren vertikalen Bewegungsbereich als der unter aufweist; und dass der obere Arm eine höchste Position (31) aufweist, die höher angeordnet ist als die höchste Position (32) des unteren Arms.

3. Vorrichtung nach Anspruch 1 oder 2, wobei die Arme (12, 13) von gleicher Länge sind und ihre Greifelemente (15) in der gleichen Weise angeordnet haben.

4. Vorrichtung nach irgendeinem der Ansprüche 1 bis 3, wobei jeder der Arme (12, 13) in seinem Rotationsstab oder -schaft (19, 20) gesichert ist, die koaxial zueinander und mit der Schwenkachse (14) sind, und auch einer über dem anderen angeordnet ist, wobei die Schafte jeder in einer Trägervorrichtung (25, 26) in der vertikalen Richtung entlang einer Führung (28) beweglich gelagert sind.

5. Vorrichtung nach Anspruch 4, wobei ein Antriebsmotor (23, 24) zum Schwenken der Schafte (19, 20) auf jeder Trägervorrichtung (25, 26) angeordnet ist.

6. Vorrichtung nach irgendeinem der Ansprüche 4 oder 5, wobei die Führung gegenseitig parallele Führungsschienen (28) beinhaltet, entlang welcher Rolleinheiten (27) auf den Trägervorrichtungen (25, 26) verlaufen können.

7. Vorrichtung nach irgendeinem der Ansprüche 4 bis 6, wobei die Trägervorrichtungen (25, 26) unter der Wirkung einer motorisierten (29) gezahnten Riemenanordnung (30) getragen werden und antreibbar sind.

8. Vorrichtung nach irgendeinem der Ansprüche 4 bis 7, wobei die Trägervorrichtungen (25, 26) mit Ausgleichsmitteln (34) verbunden sind, um mindestens einen Teil ihres Gewichtes auszugleichen.

9. Vorrichtung nach irgendeinem der Ansprüche 1 bis 8, wobei die Arme (12, 13) wechselseitig innerhalb eines Sektors von mindestens 90°, aber bevorzugt 180° schwenkbar sind.

10. Vorrichtung nach irgendeinem der Ansprüche 1 bis 9, wobei der Blechstapel (1, 2) und die Ablagestelle (9) auf einem gemeinsamen Kreisbogen (10) angeordnet sind und dass der Arm (12, 13) um eine im Wesentlichen vertikale Linie (14) durch den Mittelpunkt (11) des Kreisbogens (10) schwenkbar ist.

11. Verfahren zum individuellen Zuführen von Blechern (3, 4) von einem Stapel (1, 2) von Blechern zu einer Ablagestelle (9), wobei Verwendung von einer Zufuhrvorrichtung gemacht wird, die einen ersten (12) und einen zweiten Arm (13) umfasst, die mit Greifelementen (15) versehen sind, die für das individuelle Greifen und Halten der Bleche und deren Verschieben von dem Stapel zu der Ablagestelle vorgesehen sind, **dadurch gekennzeichnet, dass** der erste (12) und zweite Arm (13) um eine gemeinsame Schwenkachse (14) geschwenkt werden und vertikal entlang dieser verschoben werden und für das abwechselnde Auflesen von Blechern von zwei unterschiedlichen Stapeln verwendet werden, so dass:
ein erstes Greifelement (15) ein erstes Blech (3, 4) bei der Ablagestelle (9) ablegt und ein zweites Greifelement (15) ein zweites Blech (3, 4) auf dem Stapel (1, 2) greift;
das erste Greifelement zu einem ersten Niveau (32) angehoben wird und das zweite Greifelement zu dem zweiten Niveau (31) angehoben wird, das höher als das erste ist;
das erste und zweite Greifelement in entgegen gesetzter Richtungen geschwenkt werden, wobei das zweite über das erste verläuft;
das erste und zweite Greifelement abgesenkt werden, um ein drittes Blech von dem Stapel aufzulesen und das zweite Blech bei der jeweiligen Ablagestelle abzulegen;
das erste und zweite Greifelement zu dem ersten (32) und jeweiligen zweiten (31) Niveau angehoben werden;
das erste und zweite Greifelement in entgegen gesetzte Richtungen geschwenkt werden, so dass das zweite über das erste verläuft; und
das erste und das zweite Greifelement abgesenkt werden, um das dritte Blech auf der Ablagestelle abzulegen und um ein viertes Blech von dem jeweiligen Stapel aufzulesen, und so weiter.

12. Verfahren gemäß Anspruch 11, wobei die Greifelemente (15) wechselseitig zwischen dem ersten Stapel (1) und der Ablagestelle (9) geschwenkt werden bis der erste Stapel aufgebraucht ist, und dann wechselseitig zwischen dem zweiten Stapel (2) und der Ablagestelle (9), während der erste Stapel aufgefüllt wird.

## Revendications

1. Dispositif de chargement de feuille pour le déplacement individuel de feuilles métalliques (3,4) à partir d'une pile de feuilles (1,2) jusqu'à un site de dépôt (9), comprenant un premier (12) et un second bras (13) qui sont chacun pourvus d'un élément de saisie (15) qui est destiné à saisir individuellement et à tenir la feuille (3,4), **caractérisé en ce que** les bras (12, 13) sont agencés en s'étendant hors du site de dépôt et sont agencés pour un mouvement de pivotement jusqu'au site de dépôt, et pour le mouvement de retour, autour d'un axe de pivotement commun, sensiblement vertical (14) ; **en ce que** les bras (12, 13) peuvent se déplacer le long de celui-ci dans la direction verticale jusqu'à des positions (33) pour déposer une feuille, jusqu'à des positions (33) pour prendre une feuille, et jusqu'à des positions (31, 32) où l'un des bras peut être pivoté par-dessus l'autre pour la prise en alternance de feuilles dans deux piles (1, 2) différentes de feuilles (3, 4) à charger.

2. Dispositif selon la revendication 1, dans lequel le premier bras (12) est un bras inférieur, tandis que le second bras (13) est un bras supérieur ; le bras supérieur a une aire de mouvement verticale plus grande que le bras inférieur ; et le bras supérieur a une position la plus élevée (31) qui se situe plus haut que la position la plus élevée (32) du bras inférieur.

3. Dispositif selon la revendication 1 ou 2, dans lequel les bras (12, 13) sont de longueur égale et ont leurs éléments de saisie (15) placés de la même manière.

4. Dispositif selon l'une quelconque des revendications 1 à 3, dans lequel les bras (12, 13) sont fixés chacun dans leur tige ou arbre rotatif (19, 20) qui sont coaxiaux l'un avec l'autre et avec l'axe de pivotement (14), et également disposés l'un par-dessus l'autre, les arbres étant tourillonnés chacun dans un dispositif de transport (25, 26) qui peut se déplacer dans la direction verticale le long d'un guide (28).

5. Dispositif selon la revendication 4, dans lequel un moteur d'entraînement (23, 24) pour faire pivoter les arbres (19, 20) est disposé sur chaque dispositif de transport (25, 26).

6. Dispositif selon l'une quelconque des revendications 4 ou 5, dans lequel le guide comprend des rails de guidage mutuellement parallèles (28), le long desquels des unités de galet (27) peuvent se déplacer sur les dispositifs de transport (25, 26).

7. Dispositif selon l'une quelconque des revendications 4 à 6, dans lequel les dispositif de transport (25, 26) sont portés par un agencement à courroie crantée (30) et peuvent être entraînés sous l'action motorisée (29) de celui-ci.

8. Dispositif selon l'une quelconque des revendications 4 à 7, dans lequel les dispositifs de transport (25, 26) sont reliés à des moyens d'équilibrage (34) pour équilibrer au moins une partie de leur poids.

9. Dispositif selon l'une quelconque des revendications 1 à 8, dans lequel les bras (12, 13) peuvent réciproquement pivoter dans un secteur d'au moins 90°, mais de préférence 180°.

10. Dispositif selon l'une quelconque des revendications 1 à 9, dans lequel les piles de feuilles (1, 2) et le site de dépôt (9) sont disposés sur un arc de cercle commun (10) et le bras (12, 13) peut pivoter autour d'une ligne sensiblement verticale (14) passant par le centre (11) de l'arc de cercle (10).

11. Procédé d'alimentation individuelle de feuilles (3, 4) à partir d'une pile (1, 2) de feuilles jusqu'à un site de dépôt (9), en utilisant un dispositif d'alimentation comprenant un premier (12) et un second bras (13) pourvus d'éléments de saisie (15) qui sont destinés à saisir individuellement et à tenir les feuilles et à les déplacer depuis la pile jusqu'au site de dépôt, **caractérisé en ce que** l'on fait pivoter le premier (12) et le second bras (13) autour d'un axe de pivotement commun (14) et on les déplace verticalement le long de celui-ci et on les utilise pour la prise alternée de feuilles à partir de deux piles différentes de manière à ce que :
un premier élément de saisie (15) décharge une première feuille (3, 4) sur le site de dépôt (9) et un second élément de saisie (15) saisit une seconde feuille (3, 4) sur la pile (1, 2) ;
le premier élément de saisie est soulevé jusqu'à un premier niveau (32) et le second élément de saisie est soulevé jusqu'à un second niveau (31) supérieur au premier ;
les premier et second éléments de saisie sont pivotés dans des directions opposées de sorte que le second passe par-dessus le premier ;
les premier et second éléments de saisie sont abaissés pour prendre une troisième feuille de la pile et déposer la seconde feuille sur le site de dépôt, respectivement ;
les premier et second éléments de saisie sont soulevés jusqu'au premier (32) et au second (31) niveaux, respectivement ;
les premier et second éléments de saisie sont pivotés dans des directions opposées de sorte que le second passe par-dessus le premier ; et
les premier et second éléments de saisie sont abaissés pour déposer la troisième feuille sur le site de dépôt et prendre une quatrième feuille à partir de la pile, respectivement, et ainsi de suite.

12. Le procédé selon la revendication 11, dans lequel les éléments de saisie (15) sont réciproquement pivotés entre la première pile (1) et le site de dépôt (9) jusqu'à ce que la première pile soit consommée et ensuite réciproquement entre la seconde pile (2) et le site de dépôt (9), pendant que la première pile est remplie.
